(19)

Europäisches
Patentamt
European
Patent Office
Office européen
des brevets

(11)     **EP 2 933 624 A1**

(12)                                **EUROPEAN PATENT APPLICATION**

(43) Date of publication:
**21.10.2015 Bulletin 2015/43**

(51) Int Cl.:
*G01M 11/00* *(2006.01)*

(21) Application number: **15461523.1**

(22) Date of filing: **27.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **15.04.2014 PL 40789514**

(71) Applicant: **Orange Polska S.A.
02-326 Warszawa (PL)**

(72) Inventor: **Perlicki, Krzysztof
05-820 Piastów (PL)**

(74) Representative: **Piotrowicz, Alicja
Kulikowska & Kulikowski SP. J.
Intellectual Property Attorneys
Nowogrodzka 47A
00-695 Warszawa (PL)**

Remarks:
A request for correction of incorrect number of
documents cited in the prior arthas been filed
pursuant to Rule 139 EPC. A decision on the request
will be taken during the proceedings before the
Examining Division (Guidelines for Examination in
the EPO, A-V, 3.).

(54)    **METHOD FOR MEASURING CHROMATIC DISPERSION COEFFICIENT OF OPTICAL FIBER**

(57)     A laser generates a constant optical signal with constant optical power and carrier wave (modulated) with
constant frequency f. Over a period of time T, with continuous modulation of frequency of the measuring optical signal
by a frequency modulator from a first frequency $f_1$ to a second frequency $f_2$ optical power $P_2$ is determined, and with
continuous modulation of frequency from a second frequency $f_2$ to a first frequency $f_1$ optical power $P_1$ is determined,
where $f_1 > f_2$. A numerical value of the chromatic dispersion coefficient of an optical fiber under test, having the length
L, is calculated using the equation:

$$D = \frac{P_2 - P_1}{P_1} \cdot \frac{Tf^2}{2cL(f_1 - f_2)}$$

where c is the speed of light in vacuum.

Printed by Jouve, 75001 PARIS (FR)

EP 2 933 624 A1

**Description**

The present invention relates to a method of measuring the chromatic dispersion coefficient of an optical fiber, especially of an optical fiber in a telecommunication link not longer than 100 kilometres.

The United States patent US 7016023 B1 relates to chromatic dispersion measurement which consists in generating optical signals in two different laser sources, a first optical signal having a fixed wavelength and a second optical signal having a variable wavelength. These optical signals are sent, through two optical directional couplers and an optical fiber under test, to a reflex receiver located at the end of the optical fiber under test. The optical signals returning from the reflex receiver move at different speeds along the entire length of the optical fiber under test and through the second optical directional coupler they reach a detector, where the time delays between them are examined, being analyzed on an ongoing basis by a computer. Based on the group delay analysis, chromatic dispersion of the tested optical fiber segment of a known length is determined.

The European patent EP 1493008 B1 describes an apparatus and a method for measuring chromatic dispersion. The method for measuring chromatic dispersion consists in generating an optical reference signal and (in a different light source) an optical probe signal, whose wavelength is different from the wavelength of the reference signal. These two optical signals, generated in two different light sources, are conveyed to an optical device under test (for which chromatic dispersion is measured) through polarization controllers and an optical directional coupler. For the optical signals received by the optical device under test, their power, and phase differences between the optical reference signal, the optical probe signal and the optical idler signal, are measured. Based on these analyses, chromatic dispersion of the optical device under test is determined for the optical signal with wavelength equal to the optical reference signal wavelength.

The apparatus and method for measuring chromatic dispersion at variable wavelength described in the European patent EP 2202502 A1 are characterized in that a sinusoidal optical signal having variable wavelength, variable amplitude, and determined phase, is generated and then modified in a modulator into impulses having variable amplitude. The optical signal so modified is then conveyed, through a coupler, to a first end of an optical fiber under test, which has a reflecting element at its second end. After being reflected by the reflecting end of the optical fiber, modified optical signals are received at its first end. Based on the results of measuring phase differences and wavelengths of the modified optical signals, chromatic dispersion is determined for the optical fiber under test.

The essence of the method for measuring the chromatic dispersion coefficient of an optical fiber, according to the invention, consists in that a constant optical signal, generated in a semiconductor laser, with constant optical power and carrier wave (modulated) with frequency f, is conveyed to a frequency modulator, where over a period of time T the frequency of the measuring optical signal is continuously modulated between a first frequency $f_1$ and a second frequency $f_2$, whereas the numerical values of these frequencies correspond to the inequality $f_1 > f_2$. The measuring optical signals with modulated frequencies are conveyed to the input gate of an optical circulator, from where, through the output gate of the optical circulator, they are fed to an optical fiber under test, the optical fiber segment having the pre-measured length L. The measuring optical signals with modulated frequencies, whose frequencies belong to the frequency range $\Delta f = f_1 - f_2$, propagate over the entire length of the optical fiber under test and, by ceaselessly influencing one another, cause the production of optical signals with modulated amplitudes, which emerge at the measuring gate of the optical circulator, from where they are directed to an optical power meter, wherein, with the continuous variation of frequency of the measuring optical signal over the period of time T, from the first frequency $f_1$ to the second frequency $f_2$, for the second received optical signal the optical power is $P_2$, and with the continuous variation of frequency of the measuring optical signal over the period of time T, from the second frequency $f_2$ to the first frequency $f_1$, for the first received optical signal the optical power is $P_1$.

The numerical value of the chromatic dispersion coefficient of the optical fiber under test is calculated according to the equation:

$$D = \frac{P_2 - P_1}{P_1} \cdot \frac{Tf^2}{2cL(f_1 - f_2)}$$

where c is the speed of light in vacuum.

The main advantages of using the method of measuring the chromatic dispersion coefficient of an optical fiber, according to the invention, in comparison to the state of the art, consist in that it is possible to apply the method under laboratory conditions as well as under field conditions, using a minimum number of measuring devices, and having the desirable level of trust in the calculated value of the chromatic dispersion coefficient of an optical fiber present in an already installed fiber-optic link.

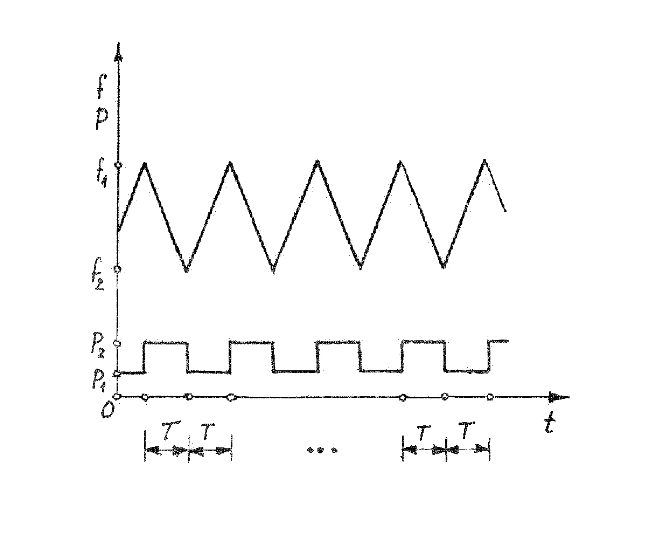

The drawing reproduces the oscillations of frequency f (expressed in Hz) and optical power P (expressed in Watts) over subsequent periods of time T (expressed in seconds).

In an example embodiment of the method for measuring the chromatic dispersion coefficient of an optical fiber, according to the invention, a constant optical signal, generated in a semiconductor laser, having constant optical power (expressed in Watts) and carrier wave (modulated) with frequency f (expressed in Hz), is conveyed to a frequency modulator. In the frequency modulator, over a period of time T (expressed in seconds), the frequency of the measuring optical signal is continuously modulated between a first frequency $f_1$ and a second frequency $f_2$, whereas the numerical values of these frequencies correspond to the inequality $f_1 > f_2$.

The measuring optical signals with modulated frequencies are conveyed, via an optical isolator, to the input gate of an optical circulator, from where, through its output gate, they are fed to the optical fiber under test, the optical fiber segment having the pre-measured length L (expressed in meters). The optical isolator, located between the frequency modulator and the optical circulator, protects the frequency modulator against optical signals coming from the optical circulator. The measuring optical signals with modulated frequencies, whose frequencies belong to the frequency range $\Delta f = f_1 - f_2$, propagate over the entire length of the optical fiber under test

The optical signals with different frequencies travel over a given length of the optical fiber in different periods of time. During propagation, the measuring optical signals, by ceaselessly influencing one another, cause the production of optical signals with modulated amplitudes. Moreover, in the optical fiber, over its entire length, when numerical values of frequencies of the measuring optical signals have small differences and their amplitudes change slowly, there occurs a phenomenon of beating-in. The optical signals with modulated amplitudes emerge at the measuring gate of the optical circulator, from where they are directed to an optical power meter.

With the continuous variation of frequency of the measuring optical signal over the period of time T, from the first frequency $f_1$ to the second frequency $f_2$, for the second received optical signal the optical power is $P_2$, and with the continuous variation of frequency of the measuring optical signal over the period of time T, from the second frequency $f_2$ to the first frequency $f_1$, for the first received optical signal the optical power is $P_1$.

The numerical value of the chromatic dispersion coefficient of the optical fiber under test is calculated according to the equation:

$$ D = \frac{P_2 - P_1}{P_1} \cdot \frac{Tf^2}{2cL(f_1 - f_2)} $$

where c is the speed of light in vacuum (expressed in metres per second).

While the method for measuring the chromatic dispersion coefficient of an optical fiber, according to the invention, is defined by one patent claim, presented as a specific example embodiment in the description of the invention, a person skilled in the field of methods for measuring the chromatic dispersion coefficient of optical fibers will find it obvious that the data about the method for measuring the chromatic dispersion coefficient contained therein cannot be interpreted as a limitation of the inventive idea to those data only.

**Claims**

1. A method for measuring the chromatic dispersion coefficient of an optical fiber consisting in: measurement of the length of the optical fiber under test, modulation of the frequency of the constant optical signal generated in a laser and measurement of the optical power and frequency of the optical signals received from the optical fiber under test, **characterised in that** a constant optical signal, generated in a semiconductor laser, having constant optical power and carrier wave (modulated) with frequency f, is conveyed to a frequency modulator, where over a period of time T the frequency of the measuring optical signal is continuously modulated between a first frequency $f_1$ and a second frequency $f_2$, whereas the numerical values of these frequencies correspond to the inequality $f_1 > f_2$, and next the measuring optical signals with modulated frequencies are conveyed to the input gate of an optical circulator, from where, through the output gate of the optical circulator, they are fed to the optical fiber under test, the optical fiber having the pre-measured length L, and the measuring optical signals with modulated frequencies, whose frequencies belong to the frequency range $\Delta f = f_1 - f_2$, propagate over the entire length of the optical fiber under test and, by ceaselessly influencing one another, cause the production of optical signals with modulated amplitudes, which emerge at the measuring gate of the optical circulator, from where they are directed to an optical power meter, wherein, with the continuous variation of frequency of the measuring optical signal over the period of time T, from the first frequency $f_1$ to the second frequency $f_2$, for the second received optical signal the optical power is $P_2$, and

with the continuous variation of frequency of the measuring optical signal over the period of time T, from the second frequency $f_2$ to the first frequency $f_1$, for the first received optical signal the optical power is $P_1$, and next the numerical value of the chromatic dispersion coefficient of the optical fiber under test is calculated according to the equation:

$$D = \frac{P_2 - P_1}{P_1} \cdot \frac{Tf^2}{2cL(f_1 - f_2)}$$

where c is the speed of light in vacuum.

**EP 2 933 624 A1**

## EUROPEAN SEARCH REPORT

Application Number

EP 15 46 1523

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 191 321 A1 (AGILENT TECHNOLOGIES INC [US]) 27 March 2002 (2002-03-27) <br> * page 2, paragraph [0007] * <br> * page 4, paragraphs [0020], [0022] * <br> * formula: 3.21; <br> figure 2 * <br> ----- | 1 | INV. <br> G01M11/00 |

TECHNICAL FIELDS
SEARCHED (IPC)

G01M
G01N
H04B

The present search report has been drawn up for all claims

| Place of search | Date of completion of the search | Examiner |
|---|---|---|
| The Hague | 8 September 2015 | Oppo, Carla Ivana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                      EP 15 46 1523

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2015

| Patent document cited in search report | Publication date | Patent family member(s) | Publication date |
|---|---|---|---|
| EP 1191321 A1 | 27-03-2002 | DE 60100064 D1<br>DE 60100064 T2<br>EP 1191321 A1<br>JP 2003014585 A<br>US 2002191190 A1 | 23-01-2003<br>17-04-2003<br>27-03-2002<br>15-01-2003<br>19-12-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7016023 B1
- EP 1493008 B1
- EP 2202502 A1